# EUROPEAN PATENT SPECIFICATION

(11) **EP 2 692 706 B1**
(45) Date of publication and mention of the grant of the patent: **30.03.2016**
(21) Application number: 11862788.4
(22) Date of filing: 02.12.2011
(51) Int. Cl.: C03C 3/085, C03C 3/087, C03C 21/00, G11B 5/73

(54) **GLASS COMPOSITION SUITABLE FOR CHEMICAL STRENGTHENING AND CHEMICALLY STRENGTHENED GLASS ARTICLE**
GLASZUSAMMENSETZUNG ZUR CHEMISCHEN VERSTÄRKUNG UND CHEMISCH VERSTÄRKTER GLASGEGENSTAND
COMPOSITION DE VERRE CONVENANT AU RENFORCEMENT CHIMIQUE ET ARTICLES EN VERRE CHIMIQUEMENT RENFORCÉS

(30) Priority: 31.03.2011 JP 2011077037; 28.04.2011 JP 2011101650
(43) Date of publication of application: 05.02.2014
(73) Proprietor: Nippon Sheet Glass Company, Limited, Tokyo 108-6321 (JP)
(72) Inventor: SENSHU, Yutaka, Tokyo 108-6321 (JP); KURACHI, Junji, Tokyo 108-6321 (JP)
(74) Representative: Hart-Davis, Jason
(86) International application number: PCT/JP2011/006768
(87) International publication number: WO 2012/131824

(56) References cited:
- JP-A- 10 067 537
- JP-A- 10 072 238
- JP-A- 11 191 212
- JP-A- 11 314 932
- JP-A- H09 507 206
- JP-A- 2004 043 295
- US-A1- 2005 003 136
- US-A1- 2008 286 548

## Description

### TECHNICAL FIELD

The present invention relates to a glass composition suitable for chemical strengthening, and more specifically to a glass composition having properties suitable for use as a glass substrate for a magnetic recording medium such as a magnetic disk. The present invention also relates to a chemically strengthened glass article.

### BACKGROUND ART

Glass is a material capable of exhibiting excellent properties such as high surface smoothness and high surface hardness. Therefore, glass is suitable for use as a substrate for a magnetic recording medium on which information is recorded using a magnetic recording device such as a hard disk drive (HDD). When glass is used as a substrate for a magnetic recording medium, the glass substrate is usually subjected to chemical strengthening to increase its strength.

Chemical strengthening is a technique for forming a compressive stress layer on the surface of a glass substrate by replacing alkali metal ions contained in the surface of the glass substrate by monovalent ions having a larger radius. Chemical strengthening is often performed by replacing lithium ions (Li⁺) by sodium ions (Na⁺) or replacing sodium ions by potassium ions (K⁺). Conventionally, a glass composition containing Li₂O and Na₂O for use as a glass substrate is subjected to chemical strengthening treatment called "mixed-salt immersion", which is a combination of two types of replacements mentioned above (Patent Literature 1). The glass composition suitable for chemical strengthening disclosed in Patent Literature 1 contains, in wt.%, 62 to 75% SiO₂, 5 to 15% Al₂O₃, 5.5 to 15% ZrO₂, 4 to 10% Li₂O, and 4 to 12% Na₂O (claim 1).

A glass substrate for a magnetic recording medium should not be deformed or should not lose its surface smoothness in a step of forming a film of a magnetic material on the glass substrate. It has been considered desirable that the glass transition temperature Tg of a glass composition for use as a glass substrate be about 500°C or higher in view of the film formation temperature of a Co-Pt-Cr magnetic material. However, a magnetic material suitable for improving the recording density tends to require glass substrates to have even higher heat resistance. For example, a Pt-Fe magnetic material requires a higher film formation temperature than the Co-Pt-Cr magnetic material. Therefore, there is a need for improvement in the heat resistance of glass substrates.

Patent Literature 2 discloses glass compositions suitable for improving the heat resistance of glass substrates. Glass compositions described in Examples of Patent Literature 2 are free of Li₂O that decreases the heat resistance (up to 1 mass% is specified as an acceptable content of Li₂O in claim 1). These glass compositions have glass transition temperatures of about 580°C or higher. Since the content of Li₂O is limited in the glass compositions disclosed in Patent Literature 2, their strength must be increased only by replacement of sodium ions when they are subjected to chemical strengthening. In view of this, Patent Literature 2 discloses that the contents of components which are more likely to inhibit the replacement of sodium ions should be limited. Specifically, the contents of SrO and BaO are limited to 4.5% by mass or less and 1% by mass or less, respectively (claim 1). However, if the content of RO (the total content of divalent metal oxides MgO, CaO, SrO, and BaO) is too low, the meltability of glass decreases. Therefore, in the glass compositions disclosed in Patent Literature 2, the upper limits of the contents of MgO and CaO are set as high as 10% by mass and 15% by mass, respectively (claim 1). In the glass compositions disclosed in Examples, the contents of MgO and CaO are adjusted in a range of 1.9 to 4.5% by mass and a range of 4.1 to 8.2% by mass, respectively.

Patent Literature 3 also discloses glass compositions suitable for improving the heat resistance and mechanical strength of glass substrates. In Patent Literature 3, 1 to 10 mass% ZrO₂ is added to the glass compositions to further increase the heat resistance and to achieve a significant improvement in the mechanical strength by chemical strengthening (claim 1). The glass compositions described in Examples of Patent Literature 3 have glass transition temperatures of about 590°C or higher. Also in Patent Literature 3, as in Patent Literature 2, the content of Li₂O that decreases the heat resistance and the contents of SrO and BaO that inhibit ion exchange are set to low values (claim 1). In the glass compositions disclosed in Examples of Patent Literature 3, the contents of MgO and CaO are 2.2 to 4.3% by mass and 3.2 to 6.5% by mass, respectively.

Patent Literatures 2 and 3 each disclose, as a measure of formability of a glass composition, a temperature difference obtained by subtracting the devitrification temperature TL of the glass composition from the working temperature T4 thereof (a temperature at which the glass composition has a viscosity of 10⁴ dPa•s). The larger this difference is, the easier it is to avoid devitrification of glass when forming the glass. The largest difference value shown in Examples of Patent Literature 2 is 17°C (Example 16), and the largest difference value shown in Examples of Patent Literature 3 is 60°C (Example 4).

### CITATION LIST

### Patent Literature

Patent Literature 1 JP 05(1993)-032431 A
Patent Literature 2 JP 2004-043295 A
Patent Literature 3 JP 2005-015328 A
A glass composition of US 2005/0000316 A1 includes, in terms of mass%: 59 to 68% of SiO_{2;} 9.5 to 15% of Al₂O₃; 0 to 1% of Li₂O; 3 to 18% of Na₂O; 0 to 3.5% of K₂O; 0 to 15% of MgO 1 to 15% of CaO 0 to 4.5% of SrO 0 to 1% of BaO 0 to 2% of TiO₂; and 1 to 10% of ZrO₂. An alkali aluminosilicate glass of US 2008/0286548 A1 has a melting temperature less than about 1,650°C and a liquidus viscosity of at least 130 kpoise.

### SUMMARY OF INVENTION

### Technical Problem

Glass substrates for use in magnetic recording media can be produced by a method in which molten glass is cast into a mold. Instead, glass sheets produced by a sheet glass mass production method typified by the float process can be cut into glass substrates. For efficient mass production of glass substrates, the latter production method is more advantageous. It is desirable that the difference obtained by subtracting the devitrification temperature from the working temperature be large to employ the latter production method.

As described above, the largest value of this difference in the conventional glass substrates suitable for chemical strengthening and having excellent heat resistance is about 60°C (Example 4 in Patent Literature 3). However, in large scale mass production facilities, it is not always easy to keep the temperature of glass in an apparatus constant for a long time. In order to stably produce glass sheets for use as glass substrates using such large scale facilities for mass production of sheet glass, it is desirable that the difference obtained by subtracting the devitrification temperature from the working temperature be larger than this largest value.

Glass compositions having such larger temperature differences are known, for example, as Comparative Examples 1 and 2 in Patent Literature 2. However, these conventional glass compositions having sufficiently large temperature differences are not suitable for use as glass substrates for magnetic recording media because, for example, the glass composition of Comparative Example 1 of Patent Literature 2 is not suitable for chemical strengthening and the heat resistance of the glass composition of Comparative Example 2 of Patent Literature 2 is not high enough.

Furthermore, the conventional glass composition in which the difference obtained by subtracting the devitrification temperature from the working temperature is large and which has high heat resistance contains ZrO₂ (see Example 4 of Patent Literature 3, in which the content of ZrO₂ is 2.0 mass%). However, the glass composition containing such an amount of ZrO₂ is not suitable for mass production using mass production facilities because the raw materials of the glass composition are hard to melt and are likely to generate "stones" in molten glass. On the other hand, if the content of ZrO₂ is reduced in the conventionally known compositions, the above-mentioned large temperature difference cannot be obtained. For example, in the compositions disclosed in Patent Literature 2, the above-mentioned temperature differences are only 13°C or less when the content of ZrO₂ is less than 0.3 mass% (Examples 1 to 3 and 7 to 14).

In view of the above circumstances, it is an object of the present invention to provide a glass composition suitable for production using sheet glass mass production facilities typified by the float process, having high heat resistance, and suitable for chemical strengthening.

### Solution to Problem

The present invention provides a glass composition containing, in mass%: 60 to 66% SiO₂; 10 to 16% Al₂O₃; 0 to 1% B₂O₃; 3 to 10% MgO; 0 to 0.9% CaO; 1 to 9% SrO; 0 to 4% BaO; 0 to 2% ZnO; 0 to 1% Li₂O; 10 to 20% Na₂O; 0 to 5% K₂O; 0 to 2% TiO₂; 0 to 0.1% ZrO₂; and 0 to 2% total iron oxide in terms of Fe₂O₃. In this glass composition, a total content of MgO, CaO, SrO, and BaO is in a range of 10 to 20%, a total content of Li₂O, Na₂O, and K₂O is in a range of 14 to 20%, and a content of SrO is higher than a content of CaO.

In another aspect, the present invention provides a chemically strengthened glass article obtained by immersing a glass article containing the glass composition according to the present invention in a molten salt containing monovalent cations having an ionic radius larger than that of sodium ions so as to ion-exchange sodium ions contained in the glass article with the monovalent cations.

### Advantageous Effects of Invention

According to the present invention, it is possible to provide a glass composition which is suitable for production using sheet glass mass production facilities because the difference obtained by subtracting the devitrification temperature of the glass composition from the working temperature thereof is large enough, and which is also suitable for chemical strengthening because the heat resistance of the glass composition is high enough.

### DESCRIPTION OF EMBODIMENTS

Hereinafter, the percentages of the components of glass compositions are all expressed in mass%, unless otherwise specified. In this description, the phrase "consisting essentially of components" means that the total content of the components referred to is 99.5 mass% or more, preferably 99.9 mass% or more, and more preferably 99.95 mass% or more. The phrase "being substantially free of a component" means that the content of the component is less than 0.1 mass%, and preferably less than 0.05 mass%.

As disclosed in Patent Literatures 2 and 3, conventionally, the ratio of components of a glass composition is determined based on a design concept that the content of Li₂O that decreases the heat resistance is limited and the contents of SrO and BaO are reduced accordingly to prevent SrO and BaO from inhibiting ion exchange of sodium ions. However, as long as the composition ratio is determined based on this concept, even if the contents of the other components are adjusted, there is a limit in increasing the difference obtained by subtracting the devitrification temperature of the glass composition from the working temperature thereof. As described above, in the conventional glass composition having a low content of ZrO₂ but having a high glass transition temperature (for example, a glass composition having a Zr02 content of less than 0.3% and a glass transition temperature of 580°C or higher), the above-mentioned difference is only about 13°C at most. The present invention is intended to provide a glass composition in which the above-mentioned difference is large enough, which has high heat resistance, and which is suitable for chemical strengthening, particularly by a fundamental reevaluation of the total content of divalent metal oxides MgO, CaO, SrO and BaO, which are collectively referred to as "RO", in consideration of the influences of each of these oxides on the properties of the glass composition, and by an overall adjustment of the contents of other components.

Hereinafter, the components of the glass composition according to the present invention are described respectively.

### (MgO)

Among the RO components, MgO is most effective in promoting ion exchange between sodium ions in the glass composition and potassium ions contained in an environment (for example, nitrate) with which the glass composition is brought into contact. In order to obtain this effect, it is desirable that the glass composition contain at least 3% MgO. MgO is also a component that increases the meltability and heat resistance of glass. In view of these, the higher the content of MgO, the better for the glass composition. However, if the content of MgO is too high, the devitrification temperature of the glass composition rises. This tendency is apparent when the content of MgO is more than 10%.

Therefore, the appropriate content of MgO is in a range of 3 to 10%. The content of MgO is preferably 4% or more, further preferably 4.8% or more, and particularly preferably 5% or more. The content of MgO may be 5.2% or more in some cases. The content of MgO is preferably less than 7%, further preferably 6.5% or less, and particularly preferably 6.2% or less. The content of MgO may be 6% or less in some cases.

For the reasons described above, it is basically preferable that the glass composition have a high content of MgO. On the other hand, for the reasons described below, the content of CaO should be reduced. The content of MgO may be at least four times or at least five times the content of CaO. It is preferable that the content of MgO be higher not only than the content of BaO, which should be reduced, but also than the content of SrO.

### (CaO)

CaO is a component of CaO•MgO•2SiO₂ (diopside). Diopside crystals are often observed in a devitrified glass composition. When the content of CaO is more than 1%, the devitrification growth rate significantly increases due to the formation of the crystals. On the other hand, CaO has the effect of improving the meltability of glass, even if the content thereof is very low.

Therefore, the appropriate content of CaO is in a range of 0 to 0.9%, preferably 0.8% or less, particularly preferably 0.7% or less, and especially preferably 0.5% or less. The content of CaO may be 0.4% or less in some cases.

### (SrO)

SrO has the effects of reducing the viscosity of the glass composition and lowering the devitrification temperature thereof. In view of these effects, the higher the content of SrO, the better for the glass composition. However, if the content of SrO is too high, migration of sodium ions in the glass composition is inhibited. The influence of this inhibition is significant when the content of SrO is more than 9%. A too high content of SrO has other influences such as a decrease in heat resistance. SrO is also a component that increases the specific gravity, although not to the extent of BaO.

Therefore, the appropriate content of SrO is in a range of 1 to 9%. The content of SrO is preferably 3% or more, further preferably 4% or more, and particularly preferably 4.3% or more. The content of SrO may be more than 4.5% in some cases. The content of SrO is preferably 7% or less, further preferably 6% or less, and particularly preferably 5.7% or less.

It is recommended to adjust the content of SrO in view of the relationship with the content of BaO. When the content of BaO is 1% or less, the content of SrO should be 4% or more, in particular, in a range of more than 4.5%, to lower the devitrification temperature sufficiently. In particular, when the glass composition is substantially free of BaO, the content of SrO is preferably in the range mentioned above. When the content of BaO is 1% or less, if the content of SrO is 4% or more, in particular, in the range of more than 4.5%, the devitrification growth rate decreases significantly and the devitrification temperature also decreases.

When the content of BaO is in a range of more than 1%, a preferable range of SrO content slightly decreases. When the content of BaO is in a range of more than 1% and 4% or less, the content of SrO is preferably 1 to 6%, and further preferably 1 to 5% for example. The content of SrO may be 1 to 4.5% in some cases.

For the reasons described above, SrO is a component that should be added more preferentially than CaO, and the content of SrO is adjusted to be higher than the content of CaO. A difference obtained by subtracting the content of CaO from the content of SrO is preferably 1% or more, further preferably 1.5% or more, particularly preferably 1.8% or more, and especially preferably 2% or more. The difference may be 3% or more in some cases. The larger this difference is, the easier it is to increase the difference obtained by subtracting the devitrification temperature from the working temperature.

### (BaO)

BaO has the effect of reducing the viscosity of the glass composition. In particular, in the co-presence of SrO in the content described above, BaO has the effect of reducing the devitrification growth rate without a rise in the devitrification temperature. However, BaO significantly prevents the migration of alkali ions in the glass composition. If the content of BaO is too high, the heat resistance of the glass composition decreases and the specific gravity thereof increases. In addition, barium as a material of BaO has a drawback that it is a toxic substance and is hard to handle.

Therefore, the appropriate content of BaO is in a range of 0 to 4%. The content of BaO is preferably 2% or less, further preferably 1.5% or less, particularly preferably 1% or less, and especially preferably 0.5% or less. Preferably, the glass composition of the present invention is substantially free of BaO.

### (RO)

RO refers to MgO, CaO, SrO, and BaO. If the content of RO is too low, the resulting glass composition lacks components that lower its viscosity, which makes it difficult to melt the glass composition. On the other hand, if the content of RO is too high, the devitrification temperature rises and the heat resistance decreases. If the content of RO is too high, the chemical durability and susceptibility to chemical strengthening also decrease.

Therefore, the appropriate content of RO (appropriate total content of MgO, CaO, SrO and BaO) is 10 to 20%. The content of RO is preferably 10 to 17%, further preferably 10 to 15%, and particularly preferably 10 to 13%.

### (SiO₂)

SiO₂ is the main component of the glass composition. If the content of SiO₂ is too low, the chemical durability and heat resistance of glass decrease. On the other hand, if the content of SiO₂ is too high, the viscosity of the glass composition increases at high temperatures, which makes it difficult to melt and form the glass composition.

Therefore, the appropriate content of SiO₂ is 60 to 66%. The content of SiO₂ is preferably 60 to 64%, further preferably 60 to 63.5%, and particularly preferably 60 to 62.7%.

### (Al₂O₃)

Al₂O₃ improves the heat resistance and chemical durability of the glass composition and further facilitates chemical strengthening. Al₂O₃ also is a component that achieves high heat resistance and contributes to the maintenance of the strength after the chemical strengthening. On the other hand, if the content of Al₂O₃ is too high, the devitrification temperature rises and the formability into a sheet shape decreases.

Therefore, the appropriate content of Al₂O₃ is 10 to 16%. Preferably, the content of Al₂O₃ is 11% or more. The content of Al₂O₃ is preferably 14% or less, and further preferably 13% or less.

### (Li₂O)

Li₂O is a component that increases the strength of the glass composition when Li₂O is replaced by sodium ions. However, if the content of Li₂O is too high, the heat resistance of glass decreases. Therefore, the appropriate content of Li₂O is 1% or less, and it is preferably 0.5% or less. Preferably, the glass composition of the present invention is substantially free of Li₂O.

### (Na₂O)

Na₂O is a component that increases the meltability and is also a component that increases the strength of the glass composition when Na₂O is replaced by potassium ions. In the glass composition of the present invention, the content of Li₂O is limited. Therefore, Na₂O in an amount necessary for chemical strengthening has to be added. On the other hand, if the content of Na₂O is too high, the heat resistance of the glass composition decreases.

Therefore, the appropriate content of Na₂O is 10 to 20%. The content of Na₂O is preferably 11% or more, and further preferably 12% or more. The content of Na₂O is preferably 18% or less, and further preferably 16% or less.

### (K₂O

Like Na₂O, K₂O is a component that increases the meltability of glass: K₂O is a component that is more effective in forming a deep compressive stress layer by chemical strengthening than Na₂O. However, if the content of K₂O is too high, the value of the surface compressive stress after the chemical strengthening decreases. In addition, K₂O is a component that is more likely to increase the viscosity of the glass composition at high temperatures than Na₂O. Therefore, the appropriate content of K₂O is 5% or less, and it is preferably 3.5% or less, and further preferably 2% or less. It is preferable to adjust the total content of Na₂O and K₂O to 14 to 18%.

### (R₂O)

R₂O refers to Li₂O, Na₂O, and K₂O. If the content of R₂O is too low, the meltability of glass decreases. On the other hand, if the content of R₂O is too high, the heat resistance decreases and the thermal expansion coefficient becomes too high.

Therefore, the appropriate content of R₂O (appropriate total content of Li₂O, Na₂O, and K₂O) is 14 to 20%. The content of R₂O is preferably 14.5 to 18%, further preferably 14.5 to 17%, and particularly preferably 14.5 to 16%.

### (TiO₂)

It is preferable that the glass composition contain TiO₂ because TiO₂ reduces high temperature viscosity, increases heat resistance, and promotes ion exchange. However, if the content of TiO₂ is too high, the meltability of the raw material decreases, and thereby devitrification readily occurs on the TiO₂ as a crystalline nucleus. Therefore, the appropriate content of TiO₂ is 2% or less. The content of TiO₂ is preferably 1.5% or less, and particularly preferably 1.4% or less. The content of TiO₂ may be 1.3% or less in some cases. In the present invention, TiO₂ is not an essential component, and the glass composition may be substantially free of TiO₂. However, in the case where importance should be placed on the effects of a decrease in the melting temperature and the working temperature resulting from the decrease in the high temperature viscosity, the content of TiO₂ is preferably 0.1% or more, further preferably 0.3% or more, and particularly preferably 0.6% or more.

### (ZrO₂)

ZrO₂ is a component that increases heat resistance and promotes ion exchange. However, if the content of ZrO₂ is too high, it is difficult to melt the raw material, and thereby the raw material is likely to cause devitrification of ZrO₂ itself to generate stones. Therefore, the appropriate content of ZrO₂ is 0.1% or less, and the content of ZrO₂ is preferably less than 0.05%. In the present invention, the glass composition may be substantially free of ZrO₂. ZrO₂ contained not only in the industrial raw material but also in a refractory material used in the sheet glass mass production facilities may be mixed into the glass composition. In the present invention, it is preferable that the total amount of ZrO₂ added and ZrO₂ mixed as an impurity be very small as described above.

### (B₂O₃)

B₂O₃ is a component that reduces the viscosity of the glass composition and improves the meltability thereof. However, if the content of B₂O₃ it too high, the heat resistance and water resistance of the glass composition decreases, and the glass composition becomes more susceptible to phase separation. In addition, compounds formed from B₂O₃ and alkali metal oxides may volatilize and damage the refractory material of a glass melting chamber. Therefore, the appropriate content of B₂O₃ is 1% or less. In the present invention, the glass composition may be substantially free of B₂O₃.

### (ZnO)

ZnO is a component that reduces the viscosity of the glass composition and promotes ion exchange. However, if the content of ZnO it too high, the glass composition becomes more susceptible to phase separation, and the resistance to devitrification decreases and the specific gravity increases. Further, zinc white volatilizes from the melted glass raw material and damages the refractory material. Therefore, the appropriate content of ZnO is 2% or less, and it is preferably 1% or less. In the present invention, the glass composition may be substantially free of ZnO.

### (Fe₂O₃)

Iron oxide allows the glass composition to absorb light in the visible and near-infrared regions. This absorption of light allows efficient non-contact heating to be performed by radiant heat when a film of a magnetic material is formed on the glass substrate by sputtering. Therefore, 2% or less iron oxide, in terms of Fe₂O₃, may be added. The content of total iron oxide (T-Fe₂O₃) in terms of Fe₂O₃ is preferably 0.05% or more, and further preferably 0.1% or more. The content of total iron oxide is preferably 1% or less, further preferably 0.5% or less, and particularly preferably 0.3% or less. It may be 0.2% or less in some cases. In the present invention, the glass composition may be substantially free of Fe₂O₃.

### (Other components)

Preferably, the glass composition according to the present invention consists essentially of the components (MgO to Fe₂O₃) listed above. The glass composition according to the present invention may contain components other than the components listed above. In that case, the content of each of the other components is preferably less than 0.5%, and more preferably less than 0.1%. The glass composition may contain, for example, As₂O₅, Sb₂O₅, SO₃, SnO₂, CeO₂, Cl, and F. These components are added to the glass composition in order to degas and refine molten glass. However, it is preferable not to add As₂O₅, Sb₂O₅, Cl, and F because they have serious adverse effects on the environment. SO₃, which is produced from the raw material added in the form of sulfate, is suitable as a component to be added for degassing. The content of SO₃ is desirably 0.05% or more, and further desirably 0.1% or more, depending on how much refining is needed. However, if the content of SO₃ is too high, in particular when a tank-type melting furnace is used, bubbles may be formed by reboiling in a refining tank and remain in the glass. Therefore, the content of SO₃ is preferably less than 0.5%, and further preferably less than 0.2%. Other examples of the components that the glass composition may contain are transition metal oxides such as CoO and NiO, which are added to color the glass composition. Still other examples of the components that the glass composition may contain are P₂O₅, GeO₂, Ga₂O₃, Y₂O₃, and La₂O₃. The glass composition may contain components other than the above-mentioned components derived from industrially available raw materials, as long as the content of the other components does not exceed 0.5%. Since these other components are added as appropriate, or are unavoidably mixed, the glass composition of the present invention may be substantially free of these other components.

### (Susceptibility to chemical strengthening)

In the glass composition according to the present invention, it is preferable that a ratio M calculated from the contents in mol% of the above components by the following formula be 0.90 to 1.20.

M = (Al₂O₃ + MgO) / (Na₂O + K₂O)

When the value of M is in the above range, the formation of a compressive stress layer by chemical strengthening readily develops. Specifically, the surface stress increases, a deeper compressive stress layer is readily formed, and the fracture load also tends to increase accordingly. The value of M is preferably 0.90 or more, further preferably 1.00 or more, particularly preferably 1.05 or more. It is preferably 1.10 or more in some cases. The value of M is preferably 1.20 or less, and further preferably 1.17 or less. It is preferably 1.15 or less in some cases. A significant effect of chemical strengthening can be obtained by adjusting the value of M appropriately. An appropriate adjustment of the value of M also has an effect on glass compositions containing high levels of SrO and BaO that inhibit ion exchange.

Hereinafter, the properties of the glass composition according to the present invention are described.

### (Glass transition temperature: Tg)

According to the present invention, it is possible to improve the heat resistance of the glass composition by raising the glass transition temperature (Tg) of the glass composition to 580°C or higher, further 590°C or higher, particularly 593°C or higher, and 595°C or higher in some cases. This glass composition is suitable for use as a glass substrate for a vertical magnetic recording medium which is exposed to high temperatures when it is heated to form a magnetic body (a magnetic recording layer) thereon. The upper limit of the glass transition temperature is not particularly limited, but it may be 700°C or lower, and may further be 650°C or lower.

### (Characteristic temperatures of glass, in particular, difference between working temperature and devitrification temperature: T4 - TL)

In the float process, the viscosity of molten glass is adjusted to about 10⁴ dPa•s (poise) when the molten glass is poured from a melting furnace into a float bath. Therefore, for glass production by the float process, it is necessary that the molten glass does not devitrify at a temperature (a working temperature T4) at which the molten glass has a viscosity of 10⁴ dPa•s, in other words, that the working temperature (T4) is higher than the devitrification temperature (TL). In addition, in large-scale mass production facilities for the float process, a local or temporary temperature change may occur in the molten glass poured into the float bath. In view of these, it is desirable that T4 be sufficiently higher than TL.

According to the present invention, it is possible to provide a glass composition in which a difference obtained by subtracting the devitrification temperature from the working temperature is as large as at least 80°C, further at least 100°C, particularly at least 120°C, and at least 150°C in some cases. The glass composition according to the present invention is suitable for production by the float process. According to the present invention, it is possible to provide a glass composition having a high glass transition temperature and having a sufficiently large value of the above-mentioned difference, although the content of ZrO₂ is reduced to a very low level. However, the glass composition according to the present invention is not limited to a glass composition in which the difference obtained by subtracting the devitrification temperature from the working temperature is as large as the value mentioned above.

According to the present invention, it is possible to lower T4 to 1150°C or lower, further 1130°C or lower, and 1110°C or lower if necessary. The lower limit of T4 is not particularly limited, and it is 1000°C, for example. In addition, according to the present invention, it is possible to lower TL to 1100°C or lower, further 1050°C or lower, particularly 1000°C or lower, and 950°C or lower in some cases. The lower limit of TL is not particularly limited, and it is 750°C, for example.

Furthermore, according to the present invention, it is possible to lower a temperature (a melting temperature T2) at which the molten glass has a viscosity of 10² dPa•s to 1650°C or lower, further 1600°C or lower, and 1560°C or lower if necessary.

### (Thermal expansion coefficient: a)

According to the present invention, it is possible for the glass composition to have a thermal expansion coefficient αL of 70 × 10⁻⁷/°C or more in a temperature range of -50 to 70°C. In addition, according to the present invention, it is also possible for the glass composition to have a thermal expansion coefficient aH of 80 × 10⁻⁷/°C or more in a temperature range of 50 to 350°C. The coefficient αL is preferably 72 × 10⁻⁷/°C or more, and particularly preferably 74 × 10⁻⁷/°C or more. Therefore, even if the glass substrate is bonded to a HDD component made of a metallic material having a high thermal expansion coefficient, such as stainless steel, it is possible to reduce the occurrence of cracking or fracture of the glass substrate caused by temperature changes during use. Moreover, even if the width of the recording track on a magnetic disk is narrowed, it is possible to reduce or avoid the occurrence of a tracking error resulting from a difference in the thermal expansion coefficient between the glass substrate and the metallic member in contact with the glass substrate. The upper limits of the thermal expansion coefficients are not particularly limited. The upper limit of the coefficient αL is 80 × 10-⁷/°C or less, for example. The upper limit of the coefficient aH is 95 × 10⁻⁷/°C or less, for example.

### (Specific gravity (density): p)

It is desirable that a glass composition for use as a glass substrate for a magnetic recording medium have a small specific gravity to reduce load on a rotary drive and reduce power consumption. According to the present invention, it is possible to reduce the specific gravity of the glass composition to 2.60 g•cm⁻³ or less, further 2.57 g•cm⁻³ or less, and 2.55 g•cm⁻³ or less in some cases.

In the float process or the like, if production is changed over from one type of glass to another type of glass and there is a large difference in the specific gravity between these two types of glass, a portion of the melt of the former type of glass remains in a melting furnace, which may interfere with a smooth changeover to the latter type of glass. The specific gravity of soda lime glass, which is currently mass-produced by the float process, is about 2.5 g•cm⁻³. Therefore, for the mass production by the float process, the specific gravity of the glass composition is preferably as small as the value mentioned above. Specifically, the specific gravity of the glass composition is preferably 2.43 to 2.57 g•cm⁻³, and particularly preferably 2.45 to 2.55 g•cm⁻³.

### (Elastic modulus: E)

When a glass substrate is subjected to chemical strengthening by ion exchange, it may be warped. It is preferable that the glass composition have a high elastic modulus to reduce this warpage. According to the present invention, it is possible to increase the elastic modules (Young's modulus E) of the glass composition to 70 GPa or more, further 73 GPa or more, and particularly 74 GPa or more.

The chemical treatment of the glass composition is described below.

The chemical treatment of the glass composition according to the present invention can be performed by bringing the glass composition into contact with a molten salt containing monovalent cations, preferably potassium ions, having an ionic radius larger than that of sodium ions so as to perform ion exchange in which sodium ions in the glass composition are replaced by the monovalent cations. Examples of the molten salt include potassium nitrate and a mixed salt of potassium nitrate and sodium nitrate. It is preferable to perform the chemical strengthening of the glass composition according to the present invention using a molten salt of potassium nitrate. The temperature of the molten salt and the treatment time can be determined as appropriate depending on the composition ratio, size and shape of the glass composition to be treated. The temperature of the molten salt is 440 to 480°C, for example. The time during which the glass composition and the molten salt are in contact with each other is 30 minutes to 8 hours, for example.

According to the present invention, it is possible to provide a glass composition having high heat resistance indicated by Tg and thus to perform the chemical strengthening at high temperatures. In addition, according to at least a preferred embodiment of the present invention, it is possible to provide a glass composition in which stress relaxation is less likely to occur during ion exchange. Therefore, the formation of a compressive stress layer can develop.

The chemically strengthened glass composition according to the present invention is suitable as a substrate for a magnetic disk, in particular, as a disk substrate for use in a high-speed rotary HDD. It should be noted, however, that the glass composition according to the present invention, regardless of whether or not it is subjected to chemical strengthening treatment, can also be used as a substrate for a display such as a liquid crystal display, a substrate for a touch panel of an information terminal device, a reflector of a light source lamp for a liquid crystal projector, a glass substrate for a solar cell, or the like.

### EXAMPLES

### (Fabrication and evaluation of glass compositions)

As glass raw materials for general purpose use, silica, titanium oxide, alumina, lithium carbonate, sodium carbonate, potassium carbonate, basic magnesium carbonate, calcium carbonate, strontium carbonate, and barium carbonate were blended at the ratios shown in Tables 1 to 4 and in Comparative Examples 1 and 6 to 9 in Table 5. Thus, glass batches were prepared. In each of Examples 41 to 48, iron oxide was further added in addition to the above glass raw materials and a portion of sodium carbonate was replaced by sodium sulfate. Each batch thus prepared was put into a platinum crucible and heated at 1650°C for 4 hours in an electric furnace. Thus, molten glass was obtained. Next, the molten glass was poured on an iron plate for cooling. Thus, a glass block was obtained. This glass block was again placed in the electric furnace and maintained at 620°C for 30 minutes. Then, the furnace was turned off to cool the glass block slowly to room temperature. Thus, a glass sample was obtained.

For each glass sample, the glass transition temperature Tg, the devitrification temperature TL, the melting temperature T2, the working temperature T4, the thermal expansion coefficient aL, the specific gravity p, and the Young's modulus E were measured. In the measurement of the devitrification temperature TL, the devitrification growth rate also was evaluated.

The glass transition temperature Tg and the thermal expansion coefficient αL were measured using a differential thermal analyzer (Thermoflex TMA 8140, manufactured by Rigaku Corporation). The melting temperature T2 and the working temperature T4 were measured by a platinum ball pulling method. The specific gravity p was measured by an Archimedes method. The Young's modulus E was measured according to JIS R 1602.

The devitrification temperature TL was measured by the following method.

The glass sample was pulverized and sieved. Glass particles that passed through a 2380-µm sieve but stayed on a 1000-µm sieve were obtained. These glass particles were immersed in ethanol, subjected to ultrasonic cleaning, and then dried in a thermostatic bath. 25 g of the glass particles were placed in a platinum boat having a width of 12 mm, a length of 200 mm and a depth of 10 mm and spread in the form of an approximately constant thickness layer. Thus, a measurement sample was obtained. This sample was placed in an electric furnace (a temperature gradient furnace) with a temperature gradient of about 900 to 1160°C and held therein for 2 hours. Then, the sample was observed using an optical microscope with a magnification of 100, and the highest temperature in a region where devitrification was observed was determined to be the devitrification temperature of the sample. In all Examples and Comparative Examples, glass particles in each measurement sample were fused together into a rod in the temperature gradient furnace.

A region of the measurement sample whose temperature was maintained in a range from the devitrification temperature TL to a temperature lower by 30°C than the devitrification temperature TL was observed with the naked eye, and the devitrification growth rate was evaluated according to the following criteria.
○: Entire region is transparent or almost transparent.
Δ: A high temperature portion near TL is transparent or almost transparent but a low temperature portion is white and opaque, and gradations of opaqueness was observed between these portions.
×: A high temperature portion near TL is white and opaque, and a clear boundary is observed between the white and opaque portion and a high temperature transparent portion.

Tables 1 to 5 show the results. The composition ratio and other data in Comparative Example 2 are quoted from Example 4 of Patent Literature 3, and the composition ratios and other data in Comparative Examples 3 to 5 are quoted from Examples 15, 16 and 9 of Patent Literature 2, respectively. The devitrification growth rates in Comparative Examples 2 to 5 are the results obtained by the same evaluation method as described above.

In each Example, the devitrification temperature TL is 1041°C or lower, and the difference T4 - TL between the working temperature and the devitrification temperature is at least 88°C. The glass transition temperature Tg is 590°C or higher. The specific gravity of the glass sample fabricated in each Example is 2.51 to 2.57 g•cm⁻³. The melting temperature T2 of the glass sample fabricated in each Example is 1642°C or lower.

In contrast, the glass transition temperature Tg of the glass sample of Comparative Example 1 is as low as lower than 500°C, which means that the heat resistance is not high enough. The glass samples of Comparative Examples 2 to 4 are not suitable for production using sheet glass mass production facilities because they contain 0.3% or more ZrO₂. As can be understood from Comparative Example 5, it is difficult to increase the difference T4 - TL if ZrO₂ is removed from the conventional glass samples.

The glass samples of Comparative Examples 6 and 7 do not exhibit appropriate properties because they contain no SrO and the contents of CaO are too high. SrO is added to the glass samples of Comparative Examples 8 and 9 so that they have lower contents of CaO than those of Comparative Examples 6 and 7 and higher contents of SrO than these lower contents of CaO. Therefore, the glass samples of Comparative Examples 8 and 9 show an increase in the difference T4 - TL to nearly 50°C. However, since the CaO contents are not low enough, the increase in the difference T4 - TL is limited.

In Tables 1 to 5, for the measurement glass samples in which devitrification was not observed in a temperature range applied (the glass samples having devitrification temperatures TL outside the temperature range in the temperature gradient furnace), the lowest measured devitrification temperatures TL or the highest measured devitrification temperatures TL are shown with inequality signs. The lowest (or highest) measured temperature deviates slightly from the lowest (or highest) temperature in the preset temperature range (about 900 to 1160°C) due to an unavoidable disturbance in the temperature distribution in the furnace.

### (Fabrication and evaluation of glass substrates)

The glass sample was cut into a doughnut shape glass plate with an outer diameter of 68 mm and an inner diameter of 20 mm. Both surfaces of the glass plate were polished with alumina abrasive grains, and further mirror-polished with cerium oxide abrasive grains. Thus, a glass disk with a surface roughness Ra (according to JIS B 0601-1994) of 2 nm or less and a thickness of 0.80 mm was obtained. This glass disk was washed with a commercially available alkaline detergent, and then immersed in a molten salt of potassium nitrate heated at 440°C for 2 hours to perform chemical strengthening treatment. After the treatment, the disk was again washed with a commercially available alkaline detergent. Thus, a glass substrate for a magnetic disk was obtained.

From the glass substrates for magnetic disks thus chemically strengthened, the glass substrates of some Examples and Comparative Example 3 were selected. For each of these selected glass substrates, the surface compressive stress and the strengthening depth were measured using a surface stress meter "FSM-6000" manufactured by Orihara Industrial Co., Ltd. For each of the glass substrates of Example 2 and Comparative Example 3, the fracture load was measured by a ball-on-ring test of 10 test samples, and the load (50% fracture load) at which fracture occurred with a probability of 50% was estimated by statistical processing.

Table 6 shows the results.

In each of the glass substrates having the ratios M of 0.90 to 1.20, the surface compressive stress value was high and the compressive stress layer formed on the surface of the glass substrate grew deep therein.

It is known in chemical strengthening treatment that the relationship between the temperature of a molten salt and the glass transition temperature (Tg) of a glass composition, as well as the immersion time in the molten salt, have a dominant influence on the strength of the strengthened glass composition. In view of the fact that the glass transition temperature Tg of Example 2 is almost equal to that of Comparative Example 3, the difference in the strength properties of these glass samples presumably results from the difference in the susceptibility to chemical strengthening indicated by the ratio M.

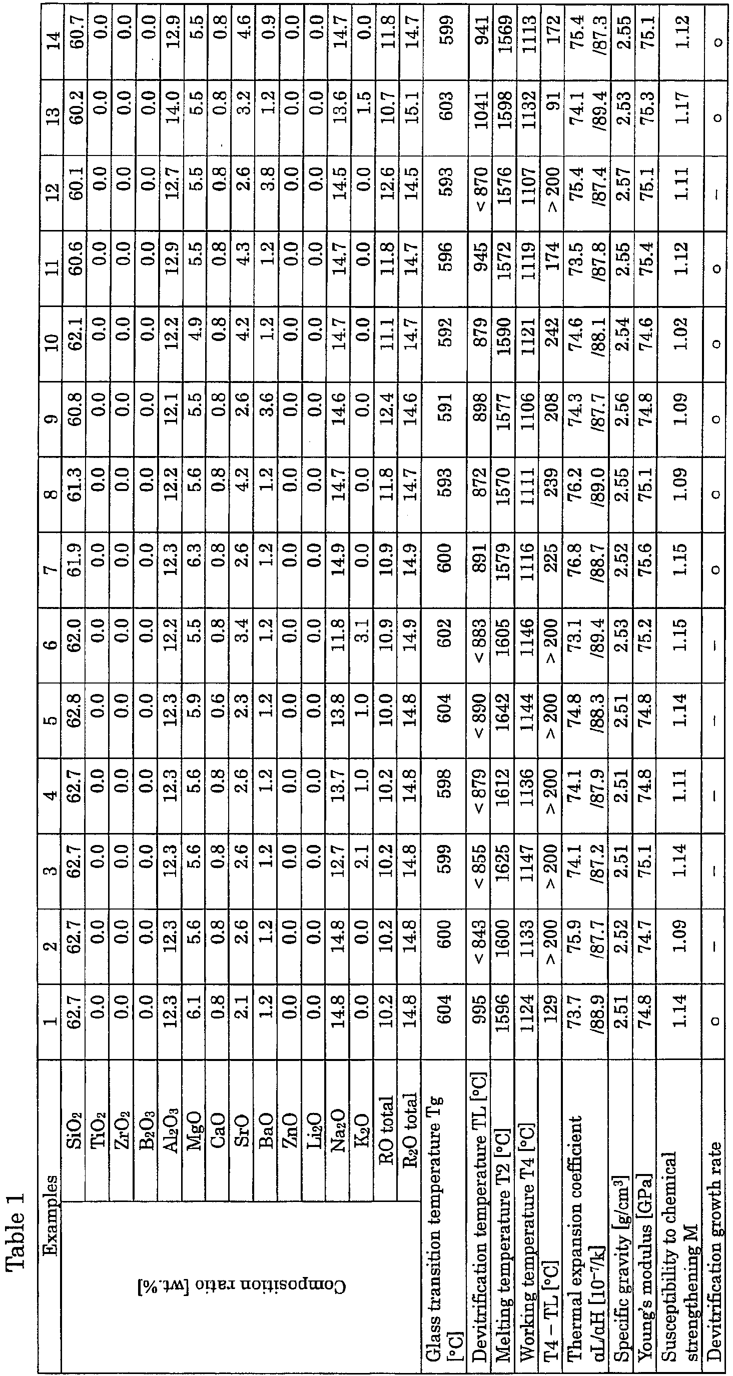

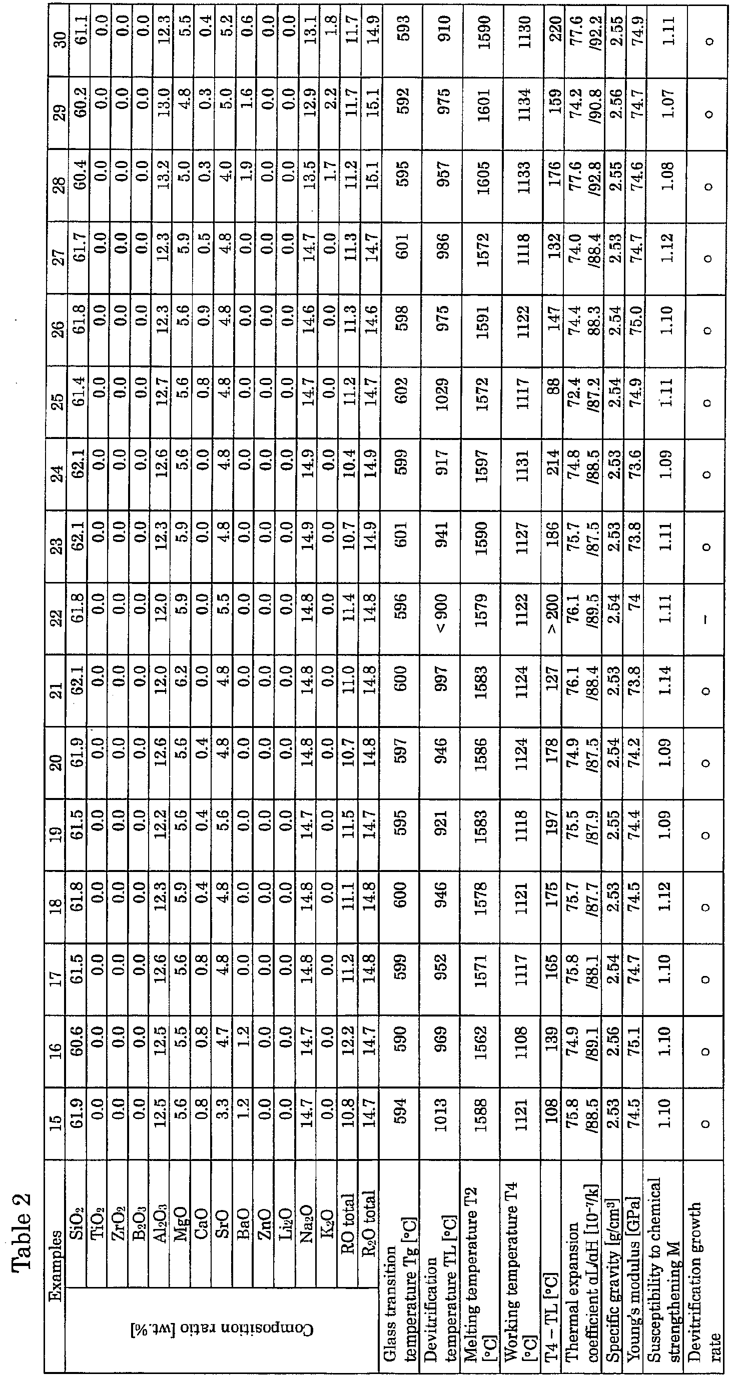

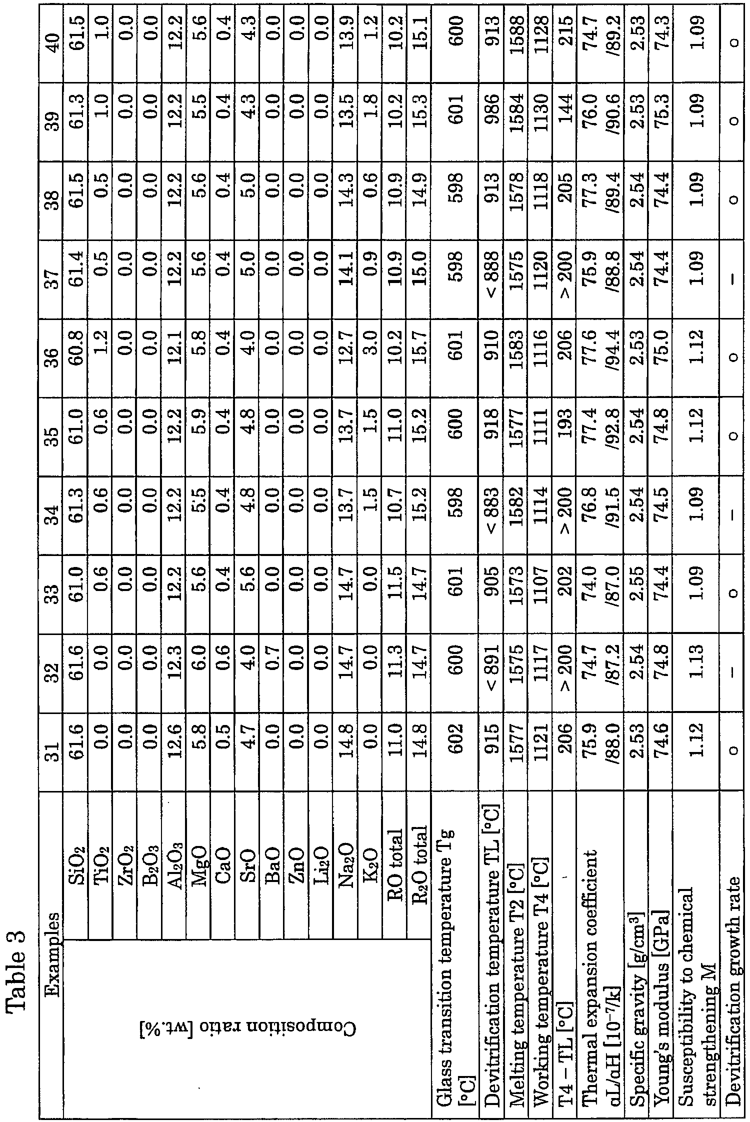

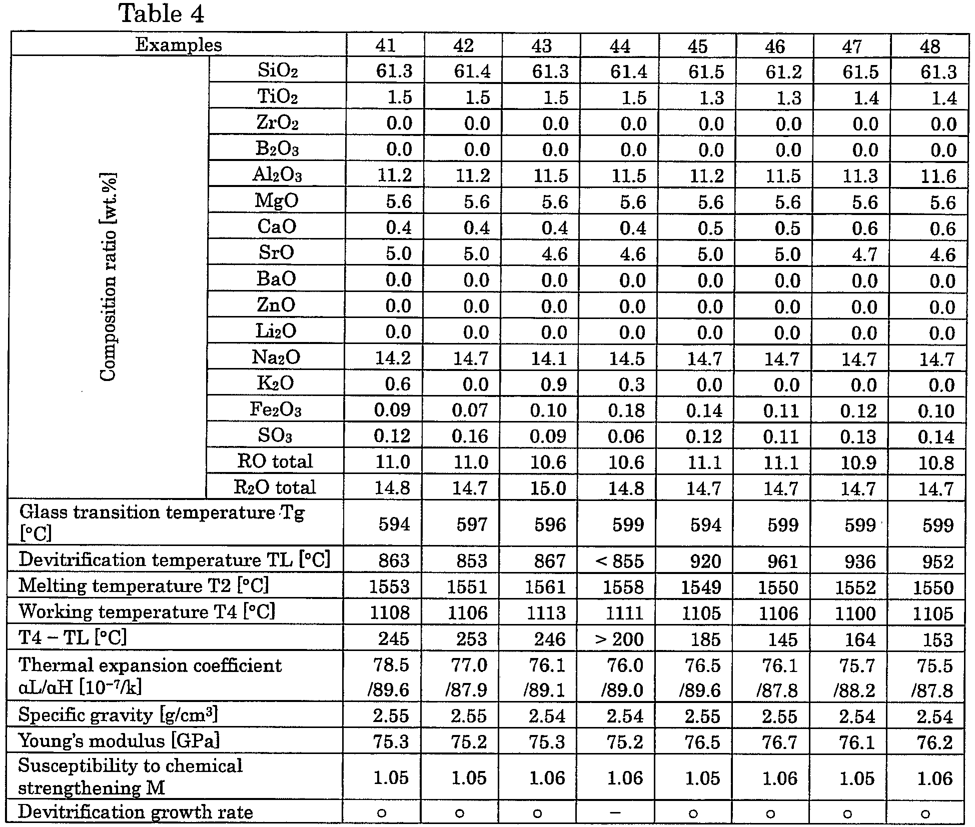

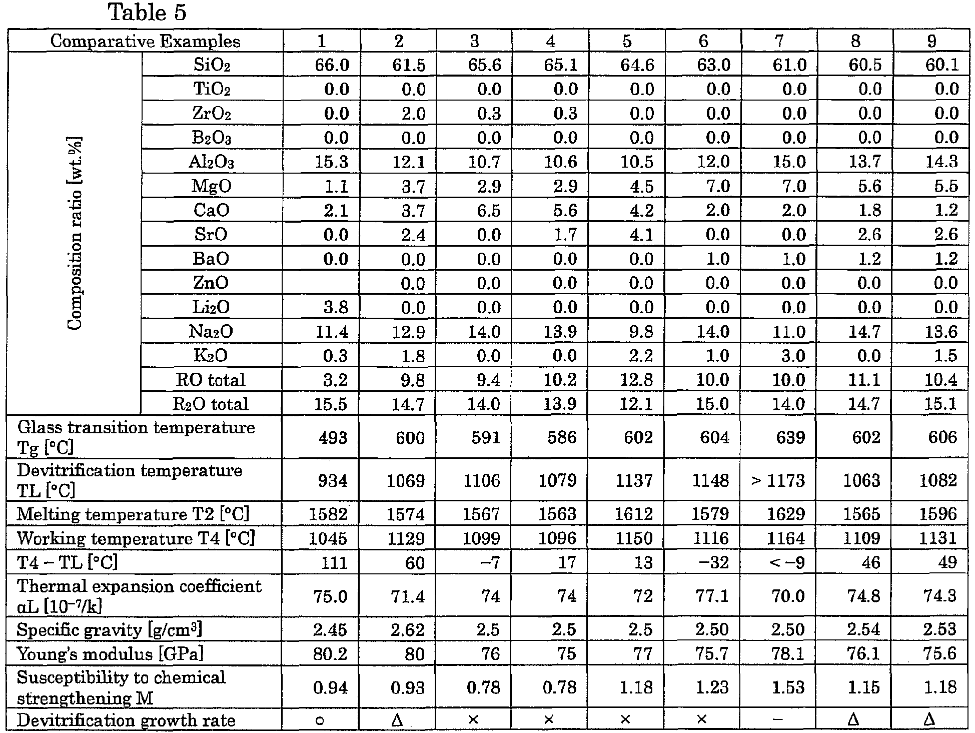

**Table 6**

| | Com. Example 3 | Examples | | | | | | | |
|---|---|---|---|---|---|---|---|---|---|
| | | 10 | 47 | 43 | 2 | 30 | 36 | 21 | 13 |
| Susceptibility to chemical strengthening M | 0.78 | 1.02 | 1.05 | 1.06 | 1.09 | 1.11 | 1.12 | 1.14 | 1.17 |
| Stress depth [µm] | 13.1 | 15.1 | 13.0 | 14.7 | 15.9 | 16.3 | 19.2 | 15.8 | 17.5 |
| Surface stress [MPa] | 772 | 897 | 1131 | 1061 | 879 | 951 | 1036 | 955 | 895 |
| Fracture load Lkgf] | 51.6 | - | - | - | 70.5 | - | - | - | - |

## Claims

1. A glass composition comprising, in mass%:
60 to 66% SiO₂;
10 to 16% Al₂O₃;
0 to 1% B₂O₃;
3 to 10% MgO;
0 to 0.9% CaO;
1 to 9% SrO;
0 to 4% BaO;
0 to 2% ZnO;
0 to 1% Li₂O;
10 to 20% Na₂O;
0 to 5% K₂O;
0 to 2% TiO₂;
0 to 0.1% ZrO₂; and
0 to 2% total iron oxide in terms of Fe₂O₃, wherein
a total content of MgO, CaO, SrO, and BaO is in a range of 10 to 20%,
a total content of Li₂O, Na₂O, and K₂O is in a range of 14 to 20%, and
a content of SrO is higher than a content of CaO.

2. The glass composition according to claim 1, wherein a content of MgO is 4.8 mass% or more.

3. The glass composition according to claim 1, wherein a difference obtained by subtracting the content of CaO from the content of SrO is at least 1.5 mass%.

4. The glass composition according to claim 1, wherein the content of SrO is 4 mass% or more.

5. The glass composition according to claim 4, wherein the content of SrO is more than 4.5 mass%.

6. The glass composition according to claim 4, wherein a content of BaO is 1 mass% or less.

7. The glass composition according to claim 1, wherein the glass composition is substantially free of BaO.

8. The glass composition according to claim 1, wherein a content of BaO is more than 1 mass% and 4 mass% or less, and the content of SrO is 1 to 6 mass%.

9. The glass composition according to claim 1, wherein a ratio M of a total content of Al₂O₃ and MgO to a total content of Na₂O and K₂O is 0.90 to 1.20 when the total contents are expressed in mol% .

10. The glass composition according to claim 1, wherein a difference obtained by subtracting a devitrification temperature TL of the glass composition from a temperature T4 at which the glass composition has a viscosity of 10⁴ dPa•s is at least 80°C.

11. The glass composition according to claim 1, wherein the glass composition has a glass transition temperature of 580°C or higher.

12. The glass composition according to claim 1, wherein the glass composition has a thermal expansion coefficient of 70 × 10⁻⁷/°C or more in a temperature range of -50 to 70°C.

13. The glass composition according to claim 1, wherein the glass composition has a specific gravity ranging from 2.43 to 2.57 g•cm⁻³.

14. A chemically strengthened glass article obtained by immersing a glass article comprising the glass composition according to claim 1 in a molten salt containing monovalent cations having an ionic radius larger than that of sodium ions so as to ion-exchange sodium ions contained in the glass article with the monovalent cations.

## Patentansprüche

1. Glaszusammensetzung umfassend in Massen-%:
60 bis 66 % SiO₂;
10 bis 16 % Al₂O₃;
0 bis 1 % B₂O₃;
3 bis 10 % MgO;
0 bis 0,9 % CaO;
1 bis 9 % SrO;
0 bis 4 % BaO;
0 bis 2 % ZnO;
0 bis 1 % Li₂O;
10 bis 20 % Na₂O;
0 bis 5 % K₂O;
0 bis 2 % TiO₂;
0 bis 0,1 % ZrO₂ und
0 bis 2 % Gesamteisenoxid in Form von Fe₂O₃,
wobei
ein Gesamtgehalt von MgO, CaO, SrO und BaO in einem Bereich von 10 bis 20 % liegt,
ein Gesamtgehalt von Li₂O, Na₂O und K₂O in einem Bereich von 14 bis 20 % liegt und
ein Gehalt von SrO höher als ein Gehalt von CaO ist.

2. Glaszusammensetzung nach Anspruch 1, wobei ein MgO-Gehalt 4,8 Massen-% oder mehr beträgt.

3. Glaszusammensetzung nach Anspruch 1, wobei eine Differenz, die durch Subtrahieren des CaO-Gehaltes von dem SrO-Gehalt erhalten ist, wenigstens 1,5 Massen-% beträgt.

4. Glaszusammensetzung nach Anspruch 1, wobei der SrO-Gehalt 4 Massen-% oder mehr beträgt.

5. Glaszusammensetzung nach Anspruch 4, wobei der SrO-Gehalt mehr als 4,5 Massen-% beträgt.

6. Glaszusammensetzung nach Anspruch 4, wobei ein BaO-Gehalt 1 Massen-% oder weniger beträgt.

7. Glaszusammensetzung nach Anspruch 1, wobei die Glaszusammensetzung im Wesentlichen frei von BaO ist.

8. Glaszusammensetzung nach Anspruch 1, wobei ein BaO-Gehalt mehr als 1 Massen-% und 4 Massen-% oder weniger beträgt, und der SrO-Gehalt 1 bis 6 Massen-% beträgt.

9. Glaszusammensetzung nach Anspruch 1, wobei ein Verhältnis M eines Gesamtgehaltes von Al₂O₃ und MgO zu einem Gesamtgehalt von Na₂O und K₂O 0,90 bis 1,20 beträgt, wenn die Gesamtgehalte in Mol-% ausgedrückt sind.

10. Glaszusammensetzung nach Anspruch 1, wobei eine Differenz, die durch Subtrahieren einer Entglasungstemperatur TL der Glaszusammensetzung von einer Temperatur T4 erhalten ist, bei der die Glaszusammensetzung eine Viskosität von 10⁴ dPa•s aufweist, wenigstens 80 °C beträgt.

11. Glaszusammensetzung nach Anspruch 1, wobei die Glaszusammensetzung eine Glasübergangstemperatur von 580 °C oder höher aufweist.

12. Glaszusammensetzung nach Anspruch 1, wobei die Glaszusammensetzung einen Wärmeausdehnungskoeffizienten von 70 x 10⁻⁷/°C oder mehr in einem Temperaturbereich von -50 bis 70 °C aufweist.

13. Glaszusammensetzung nach Anspruch 1, wobei die Glaszusammensetzung ein spezifisches Gewicht von 2,43 bis 2,57 g·cm⁻³ aufweist.

14. Chemisch gehärteter Glasartikel, der durch Tränken eines die Glaszusammensetzung nach Anspruch 1 umfassenden Glasartikels in ein geschmolzenes Salz erhalten ist, das einwertige Kationen enthält, die einen lonenradius aufweisen, der größer als der von Natriumionen ist, um in dem Glasartikel enthaltene Natriumionen gegen die einwertigen Kationen auszutauschen.

## Revendications

1. Composition de verre comprenant, en % en masse :
60 à 66 % de SiO₂ ;
10 à 16 % de Al₂O₃ ;
0 à 1 % de B₂O₃ ;
3 à 10% de MgO;
0 à 0,9 % de CaO ;
1 à 9 % de SrO ;
0 à 4 % de BaO;
0 à 2 % de ZnO;
0 à 1 % de Li₂O ;
10 à 20 % de Na₂O ;
0 à 5 % de K₂O ;
0 à 2 % de TiO₂ ;
0 à 0,1 % de ZrO₂ ; et
0 à 2 % d'oxyde de fer total en termes de Fe₂O₃, où
une teneur totale en MgO, CaO, SrO, et BaO se trouve dans un intervalle de 10 à 20 %,
une teneur totale en Li₂O, Na₂O, et K₂O se trouve dans un intervalle de 14 à 20 %, et
une teneur en SrO est supérieure à une teneur en CaO.

2. Composition de verre selon la revendication 1, dans laquelle une teneur en MgO est de 4,8 % en masse ou supérieure.

3. Composition de verre selon la revendication 1, dans laquelle une différence obtenue par soustraction de la teneur en CaO de la teneur en SrO est d'au moins 1,5 % en masse.

4. Composition de verre selon la revendication 1, dans laquelle la teneur en SrO est de 4 % en masse ou supérieure.

5. Composition de verre selon la revendication 4, dans laquelle la teneur en SrO est supérieure à 4,5 % en masse.

6. Composition de verre selon la revendication 4, dans laquelle une teneur en BaO est de 1 % en masse ou inférieure.

7. Composition de verre selon la revendication 1, dans laquelle la composition de verre est pratiquement exempte de BaO.

8. Composition de verre selon la revendication 1, dans laquelle une teneur en BaO est supérieure à 1 % en masse et de 4 % en masse ou inférieure, et la teneur en SrO est de 1 à 6 % en masse.

9. Composition de verre selon la revendication 1, dans laquelle un rapport M d'une teneur totale en Al₂O₃ et en MgO à une teneur totale en Na₂O et K₂O est de 0,90 à 1,20 lorsque les teneurs totales sont exprimées en % en mole.

10. Composition de verre selon la revendication 1, dans laquelle une différence obtenue par soustraction d'une température de dévitrification TL de la composition de verre d'une température T4 à laquelle la composition de verre présente une viscosité de 10⁴ dPa.s est d'au moins 80 °C.

11. Composition de verre selon la revendication 1, dans laquelle la composition de verre présente une température de transition vitreuse de 580 °C ou supérieure.

12. Composition de verre selon la revendication 1, dans laquelle la composition de verre présente un coefficient de dilatation thermique de 70 x 10⁻⁷/°C ou supérieur dans un intervalle de température de -50 à 70 °C.

13. Composition de verre selon la revendication 1, dans laquelle la composition de verre présente une densité spécifique comprise entre 2,43 et 2,57 g.cm⁻³.

14. Article de verre chimiquement renforcé obtenu par immersion d'un article de verre comprenant la composition de verre selon la revendication 1 dans un sel fondu contenant des cations monovalents présentant un rayon ionique supérieur à celui des ions sodium de sorte à réaliser un échange d'ions des ions sodium contenus dans l'article de verre avec les cations monovalents.
